# EUROPEAN PATENT SPECIFICATION

(11) **EP 3 388 781 B1**
(45) Date of publication and mention of the grant of the patent: **07.06.2023**
(21) Application number: 16872466.4
(22) Date of filing: 07.12.2016
(51) Int. Cl.: G01B 11/30, G01C 11/02, G01C 11/14, G01B 11/25, G01N 21/88

(54) **SYSTEM AND METHOD FOR DETECTING DEFECTS IN SPECULAR OR SEMI-SPECULAR SURFACES BY MEANS OF PHOTOGRAMMETRIC PROJECTION**
SYSTEM UND VERFAHREN ZUR FEHLERDETEKTION BEI SPIEGELNDEN ODER HALBSPIEGELNDEN OBERFLÄCHEN MITTELS EINER FOTOGRAMMETRISCHEN PROJEKTION
SYSTÈME ET PROCÉDÉ DE DÉTECTION DE DÉFAUTS DANS DES SURFACES SPÉCULAIRES OU SEMI-SPÉCULAIRES PAR PROJECTION PHOTOGRAMMÉTRIQUE

(30) Priority: 07.12.2015 ES 201531776
(43) Date of publication of application: 17.10.2018
(73) Proprietor: Universidad De Zaragoza, 50009 Zaragoza (ES)
(72) Inventor: AGUILAR MARTÍN, Juan José, 50009 Zaragoza (ES); SANTOLARIA MAZO, Jorge, 50009 Zaragoza (ES); SAMPER CARNICER, David, 50009 Zaragoza (ES); VELÁZQUEZ SANCHO, Jesús, 50009 Zaragoza (ES)
(74) Representative: Hoffmann Eitle
(86) International application number: PCT/ES2016/070865
(87) International publication number: WO 2017/098071

(56) References cited:
- EP-A2- 0 286 994
- WO-A1-2011/144964
- CN-A- 102 445 167
- DE-A1- 19 944 354
- JP-A- 2003 329 428
- US-A- 5 471 307
- US-A- 5 477 268
- US-A- 5 726 705
- US-A1- 2011 141 483
- US-B1- 6 266 138

## Description

### Field of the Invention

The present invention is encompassed in the technical field corresponding to surface analysis for the detection and location of defects or heterogeneities. Its field of application relates primarily to industrial processes in which end products require a paint finish, as in the case of the automotive industry, the transport industry, the home appliance industry, etc. More specifically, the invention relates to a system for the detection and location of defects on specular or semi-specular surfaces of objects by means of photogrammetric projection which can be used in real time in an industrial assembly or manufacturing line. The invention also relates to a method for detecting defects based on said system.

### Background of the Invention

Paint treatments are often used to improve the surface characteristics of industrial products, such as their corrosion and wear resistance, to improve the adhesion of other products, the leak-tightness so as to prevent the entry of water, and the aesthetic properties such as color or shine.

Once the paint treatment of said products has ended, the inspection thereof is often performed in the framework of quality control processes. In many cases, said inspection is usually a visual inspection performed by operators in suitable facilities in order to have the necessary and required illumination. Nevertheless, the final decision to validate always depends on the viewing and the analysis conducted by the person responsible for the inspection, so there are many constraints or uncontrolled situations (fatigue, mood, or distractions) which may lead to some defects not being correctly detected, remaining in the end product that reaches the customer.

Once a product with a defective finish is no longer on the production line, repairing its surface finish entails greater logistic and operative complexity, with the subsequent impact on production costs. Therefore, if defects are efficiently detected in a first control on the production line, the associated cost will be much lower.

The defects to be identified can generally be of two types: those causing a local surface geometry variation and those causing a local contrast or color variation.

The first group of defects includes specks or motes which have adhered to the product before the painting process, with this being the most common defect. It occurs as a result of the inclusion of dirt, foreign bodies, and dust, which cause small and granulated uneven spots, with there almost always being a large amount of them that are distributed more or less evenly, locally modifying the surface geometry. These defects are best detected when they are made more visible during observation, i.e., when they are illuminated with structured light, in the proximities of a light-dark light boundary. That change in light which is reflected in that area is what enables detecting the defect using artificial vision techniques on the images taken by cameras. The reflection of structured light is essentially curvature-sensitive and therefore allows detecting defects relating to geometry variation which are imperceptible using conventional artificial vision techniques or triangulation techniques with direct projection on the surfaces. The operating principle is based on the generation of relative movement between the surface to be examined and the light with which they are illuminated.

The second group of defects includes small scratches, stains, etc., which can also be detected by means of diffuse illumination and gradient or contrast algorithms.

There are detection systems for detecting dents or undulations with a typical depth of a few microns, intended for the inspection of panels for vehicle bodies, based on the use of 3D optical sensors and signal processing means, such as the one described in the article "Visualization and Detection of Small Defects on Car-Bodies" (S. Karbacher et al.), published in Vision, Modeling and Visualization '99 (Proceedings), Infix, 1-8 (1999). These systems may comprise a frame integrated in an automobile production line, where a plurality of light emission sources and cameras is installed for detecting the light reflected by the surfaces of the automobiles. They also incorporate means for acquiring data generated by the emission sources and the cameras, as well as a subsystem for the processing and analysis of surface defects of the automobiles to be inspected.

On the other hand, there are also references to real-time photogrammetry systems based on short-range digital photogrammetry for analyzing deformations in automobile bodies on the assembly line, such as the one described in the article entitled "Automated Dimensional Inspection with Realtime Photogrammetry" (H.A. Beyer), published in ISPRS Journal of Photogrammetry and Remote Sensing, Volume 50, Issue 3, pages 20-26 (1995). This system is based on the use of CCD cameras for inspecting automobiles, together with hardware and software used for analyzing the obtained data.

Although the systems described above and their associated methods serve to detect surface heterogeneities in the products by means of different techniques, the main problem they all have is that they comprise a high error rate in the identification of defects with small dimensions due to the interference generated by vibrations and noises resulting from movement on the production line. Additionally, the mentioned systems are not suitable for analyzing products with specular or semi-specular surfaces of different colors on one and the same production line.

On the other hand, a system consisting of high-contrast structured light which is capable of highlighting the geometric defect by means of an optical amplification phenomenon in the proximities of the illumination boundary and allows detecting defects with greater precision and higher resolution is needed.

International patent publication WO 2011/144964 A1 refers to an inspection system and a method for detecting defects on specular surfaces, that includes an illumination subsystem hat moves with respect to an article, e.g. a vehicle, to be inspected. A vision subsystem may gather images of light reflected from the article and execute a methodology to detect defects on one or more surfaces of the article.

The US patent publication US-5726705 discloses a surface defect inspection apparatus a lighting unit shaped in an arched form laid across the path of movement of an object under inspection for illuminating its surface. A light diffusion sheet is located between the lighting unit and the path of movement of the object for forming a bright and dark light pattern on the surface of the object.

The US patent publication US-6266138 discloses a surface inspection system provided for detecting defects on a surface of a workpiece. The surface inspection system includes a diffused light source for emitting an elongated line of light onto the surface of the workpiece, a movable member for translating the workpiece in relation to the light source, and an imaging device positioned at a vantage point such that the line of light is within its field of observation for capturing two or more sets of image data representative of a portion of the surface of the workpiece.

The US patent publication US-5477268 discloses an apparatus utilized to detect defects and finish a surface of a workpiece moving at a predetermined speed along an automatic finishing line. The defects are detected and the surface is finished by a manipulator disposed at a predetermined finishing station of the automatic finishing line.

The European patent publication EP-0286994 refers to a method for the detection of defects on the surface of an object, preferably for the detection of paint defects on the surface of a motor vehicle body, wherein a light strip is generated on the surface by means of an illumination system and this is guided over it by a relative movement between the illumination system and the surface.

There is therefore a need to solve the problems existing today in known detection methods so as to improve the precision and quality of the obtained image and thereby obtain more precise results in defect detection, in turn reducing the occurrence of false positives.

### Brief Description of the Invention

Therefore, one object of the present invention is to obtain detection systems for detecting defects which allow obtaining precise results, improving defect detection rates in the objects to be inspected. To that end, the invention proposes the use of redundancy patterns in the gradients of the structured light used, and a suitable camera capture rate, such that two-dimensional (2D) and three-dimensional (3D) filters can be used, by means of photogrammetric projection, to eliminate vibrations, reflections, and noises present in the production line for producing the objects. In ex-works inspection, the object to be inspected is usually in motion due to the displacement of the production line itself, with the patterns of light remaining stationary. This allows relative movement between the product and light to examine the entire surface of the object which, together with the treatment, detection, and tracking algorithms suitable for that purpose, allows inspection without interfering with the normal movement of the products on the manufacturing line.

Said object of the invention is preferably obtained by means of a detection system according to claim 1.

In a preferred embodiment of the invention, the cameras are capture cameras with an image acquisition frequency comprised between 40 and 100 Hz. More preferably, the cameras are industrial CCD- or CMOS-type cameras.

In another preferred embodiment of the invention, the light emission means are direct illumination means for direct illumination on the objects to be inspected. More preferably, said means comprise neon light emitters, fluorescent emitters, or light emitting diodes (LEDs).

In another preferred embodiment of the invention, the light emission means are indirect illumination means for indirect illumination on the objects by means of projection or rear-projection onto one or more screens. More preferably, the indirect illumination means emit periodic patterns of light and shade onto the screens which are in turn reflected onto the objects to be inspected.

In another preferred embodiment of the invention, the subsystem for control and analysis of information comprises 2D and/or 3D filtering means for identifying defects in said images, analysis means for analyzing the color of the objects to be inspected, and/or representation means for representing the objects and the identified defects by means of augmented reality.

In another preferred embodiment of the invention, the system also comprises one or more of the following elements: high-resolution lenses for the cameras, one or more computers for system processing and control, one or more measuring elements for controlling the position of the objects and synchronizing the captures of the cameras.

Another object of the invention relates to a method according to claim 10.

Generally speaking, the system and method for detecting defects of the invention solve the technical problem of achieving optimal location and identification of the type of defect on the production line itself by means of a robust system, optionally incorporating augmented reality tools for subsequent efficient repair by an operator. The system includes a series of cameras located such that they cover the entire surface to be investigated, where said cameras are prepared for the high-speed acquisition of images which will then be treated by means of real-time artificial vision algorithms.

As mentioned, the illumination means consist of a set of light beams or high-contrast patterns of structured light capable of highlighting the geometric defect by means of an optical amplification phenomenon in the proximities of the illumination boundary, i.e., in the periodic light-to-dark and dark-to-light transitions of the illumination pattern used. In these transitions, the reflection of the light varies due to local curvature variation, which allows highlighting defects with a diameter up to ten times the size of the defect itself. This phenomenon is what enables the system to detect small, micrometric-sized defects. The light that strikes the surface must have a high contrast, for example, by means of patterns of light/shade. Said set of light beams can be created using high-frequency fluorescent tubes, LED illumination tubes, or by means of the projection or rear-projection of images with high-contrast patterns onto a screen which is reflected on the surface.

Illumination is one of the most important components of the system, since the success of good defect recognition in the image depends greatly on good light reflection on the surface. As described in the preceding paragraphs, the invention considers two possible forms of illumination: direct and indirect.

The first illumination system, i.e., direct illumination, is carried out by means of using LED illumination or neon tubes or high-frequency fluorescent tubes fixed to the structure of the system (inspection tunnel, for example). The reflection of this light generates a redundant, fixed pattern of lines on the moving surface of the object, which allows a complete scanning of the surface of the objects.

The second system, i.e., indirect illumination, works by means of projectors. The basic principle is to project or rear-project different patterns of high-contrast structured light onto a screen located in the proximities of the object to be inspected and observe the scanning of the patterns reflected on the moving or still object. Different patterns of light, such as dots, straight lines, circles, crosses, squares, triangles, etc., can be generated with this technique, where the most suitable illumination can be selected depending on the shape of the object to be controlled. The patterns of light may be fixed, surface-adaptive, moving to certain positions to perform the scan, or they may sequentially be a light-dark pattern of the described shapes followed by their inverse dark-light pattern. As mentioned above, the adaptive patterns vary the size of the grating depending on the curvature of the surface to be inspected, such that the areas close to the light-dark boundaries are of the minimum size suitable for locating defects. These patterns can also be designed such that the number of amplifications per number of images is maximized, such that the surface is examined with the minimum number of images. Both the shape and the size of the pattern grating can be gradually changed throughout the inspection in order to adapt to the curvature of the surface when the product is in motion, or to scan the entire surface when the product remains stationary.

Cameras are the other fundamental part of the system. They are arranged such that it is possible to entirely cover the area to be inspected by means of contactless inspection, without interfering with normal movement of the products along the manufacturing assembly line, and such that the angles of reflection of the light maximize the detection of surface defects.

In a non-claimed example the detection system for detecting defects remains stationary on the supporting structure of the system. The products to be inspected are those which can move (perform normal movement of the line without interfering with the production speed and without having to redirect the products) for scanning thereof. These displacements of the products are obtained by means of a measuring system which captures the movement of the production line. Therefore, the system can be incorporated in the production line, so the production process time is not increased due to product inspection.

The alternative considered by the invention is to inspect stationary products, in which case the illumination means must scan or move across the entire surface to be inspected.

Industrial viewing cameras are provided for capturing images, the high capture frequency of which enables the detection of defects even though there are possible vibrations associated with the movement of the products during inspection. To determine the number and the type of cameras that are part of the system, the maximum speed of the production line, the maximum width to be inspected, the different changes or inclinations of the normal to the surface, and the minimum defect size to be detected must be taken into account.

In a non-claimed example the system is configured for capturing images in a synchronized manner with respect to the cameras and the movement of the inspected product as it is displaced along the production line. In the event of possible production line shutdowns, the system has a measuring element (encoder, distance measuring instrument, speedometer, viewing camera, etc.) for controlling the position of the object and synchronizing camera capture, such that synchronism is not lost at any time during inspection.

To optimally capture images of products having different colors, the possibility of adapting the capture parameters (gain, exposure time, etc.) to the specific color of the inspected product is incorporated in the system, keeping those capture parameters updated over time and therefore reactive to possible variations in camera sensitivity and in luminance of the illumination systems.

After capturing the images, they are processed in real time by means of optimized image treatment algorithms (image smoothing, gray level gradient highlighting, or contour detection algorithms) which allow detecting defects as a result of local gray level variations.

Masks are furthermore applied to treat only the areas of interest of the captured images, thereby increasing the process speed and preventing reflections of unwanted areas. For the system to have a high capacity for locating defects and for there not to be false positives, the detected possible defect is tracked during 2D inspection, taking into account both its physical behavior and its optical properties in consecutive images. In turn, the 2D spatial information obtained in this process is treated to obtain the 3D spatial approximation of the detection of the defect, to that end, different groups of homogeneous and symmetrical polynomials formed by monomials with different heterogeneous spatial and transient variables are used. By crossing this information and applying different statistical treatments to the data obtained in both processes, it is possible to determine with sufficient certainty if a positive detection of the system is due to a defect or a spurious reflection on the inspected surface, which allows filtering to be performed based on the 2D information, eliminating the false positives that may be produced. Furthermore, obtaining the 3D coordinates of the defects by means of photogrammetric projection of the possible 2D defects on the nominal surface of the inspected product allows improving the treatment by integrating a 3D cluster filtering with which system performance is strengthened using a high redundancy.

Redundancy in image capture is also used as a self-diagnostic method as a result of the overlapping of the fields of vision of the cameras. The defects detected in these overlapping areas allow calculating the misalignment errors of the cameras. When the difference between the 3D coordinates of the defects exceeds a threshold, the system can be configured to warn of the need to recalibrate the affected cameras.

The images are analyzed by means of several data treatment units and with a central control PC. The calculation mechanism of the processors performs all the arithmetic and logical link operations with respect to the obtained data. The control PC controls the system such that all the operations are performed in the temporal and logical order of succession.

The main advantage of the invention is the large number of times a defect is detected as a result of the use of redundancy in the gradients of the structured light used and the camera capture rate, such that suitable 2D and 3D filters can be used (by means of photogrammetric projection) so that vibrations, reflections, and noises present in the production line are eliminated. In a non-claimed example, during inspection, the object is usually the one that moves, i.e., the production line itself being displaced, with the patterns of light remaining stationary. This allows the relative movement between the product and the light to scan or examine the entire surface of the object which, together with the developed treatment, detection, and tracking algorithms, allows inspection without interfering with the normal movement of the products on the manufacturing line.

Once the 3D coordinates of the defects, their classification, and severity have been obtained, the results are graphically displayed on a screen or in augmented reality glasses so as to make subsequent quick repair thereof easier.

### Description of the Drawings

Figure 1 shows a perspective view of the system of the invention according to a preferred embodiment thereof based on direct illumination means through fluorescent tubes.
Figure 2 shows a perspective view of the system of the invention according to a preferred embodiment thereof based on direct illumination means through a LED tunnel.
Figure 3 shows a perspective view of the system of the invention according to a preferred embodiment thereof based on indirect illumination means through projection onto screens.
Figure 4 shows a perspective view of the system of the invention according to a preferred embodiment thereof, where said system is integrated in a production line for producing the objects to be inspected.
Figures 5-8 show the illumination and projection patterns used in different embodiments of the present invention.

### Detailed Description of the Invention

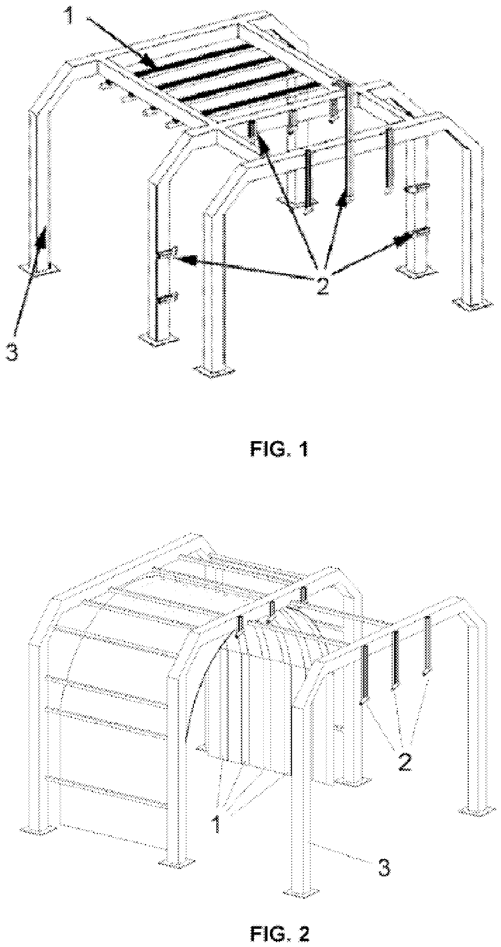

Different preferred embodiments of the invention provided to illustrate but not limit said invention are described below. In reference to Figures 1 to 4 herein, the detection system for detecting defects on surfaces of the invention comprises:
- a plurality of light emission means (1) for emitting light onto the surfaces of one or more objects to be inspected;
- a plurality of cameras (2) for recording the light reflected by said surfaces;
- a stationary supporting structure (3) integrated in the production line for producing the objects to be inspected, in which the light emission means (1) and the cameras (2) of the system are arranged;
- a subsystem (not shown in Figures 1 to 4) for control and analysis of information associated with the light emitted by the light emission means (1) and/or with the light detected by the cameras (2).

A plurality of industrial viewing cameras (2) having a high image capture frequency per second, typically comprised between 40 and 100 Hz, for example, CCD or CMOS cameras, will preferably be used for capturing images of the surfaces to be inspected. The specific number and type of cameras that will be part of the system will depend on different parameters, such as the dimensions of the object to be inspected, the maximum speed of the manufacturing line, and the minimum size of the defect to be detected. For example, for the full inspection of a vehicle body, 25 to 30 40-Hz CMOS cameras can be used for detecting defects up to 0.1 mm on a manufacturing line with a speed of 130 mm/second.

In a non-claimed example, the elements of the detection system for detecting defects will remain fixed on the supporting structure (3) (for example, a gantry structure in Figure 1) as the objects to be inspected are displaced on the production line thereof. During said displacement, the cameras (2) will gradually acquire images of the objects in order to then be processed by the subsystem for control and analysis, obtaining three-dimensional (3D) information about the dimensions of the defects and their location on the surfaces of the objects. Suitable light emission means (1) must be used to take the images (i.e., to suitably record the light reflected on the objects) because the success of good image recognition depends greatly on good illumination.

According to the invention, the objects to be inspected remain stationary, the light emission means (2) being those which scan their surfaces.

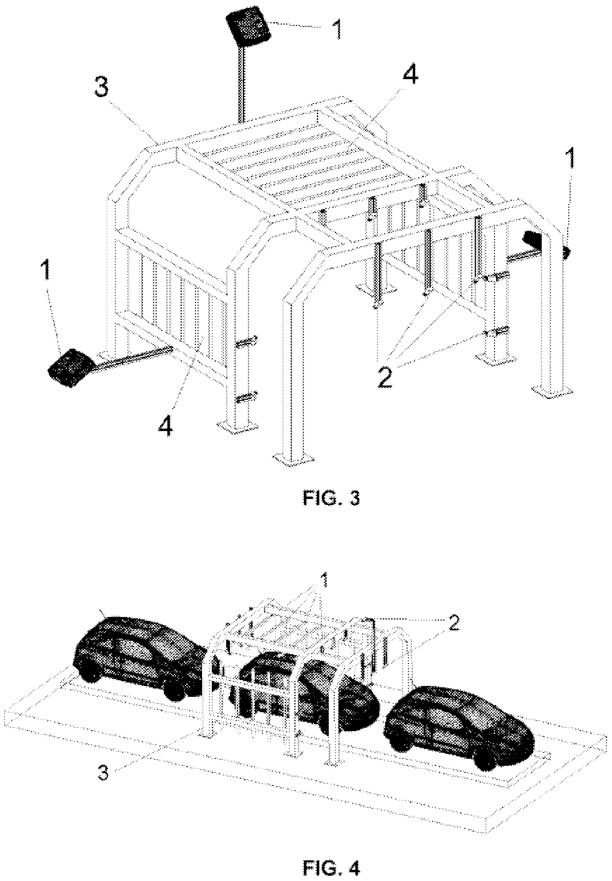

In a first preferred embodiment of the invention, illumination is performed through light emission means (1) that emit direct light onto the objects, i.e., said light directly striking the surfaces to be inspected. More preferably, said means can be neon tubes or high-frequency fluorescent tubes (Figure 1), or means based on light emitting diodes (LEDs) (see Figure 2, where said technique configured as an illumination tunnel for illuminating the objects to be inspected is used). Figure 4 shows an example of this type of illumination integrated in a system for detecting defects on automobile surfaces.

In a second preferred embodiment of the invention (Figure 3), the light emission means (1) are indirect illumination means for indirect illumination on the objects by means of projection or rear-projection. The basic principle of this embodiment is to project or rear-project different patterns of light onto a screen (4) located in the proximities of the object to be inspected and observe the scanning of the patterns reflected on the surface thereof. Figure 3 shows an example of the projection of a pattern of linear light which behaves like the light provided by fluorescent tubes (Figure 1). The number of projectors required will be determined depending on the type of object to be inspected. For an example of an automobile body inspection, at least 3 projectors are required (one for analyzing horizontal surfaces and two for analyzing lateral surfaces of the automobile, as shown in Figure 3, also with a gantry-type supporting structure (3).

The main advantage of the present invention is obtained by means of the arrangement of the light emission means (1) in both direct and indirect illumination, such that a periodic and high-contrast illumination pattern is generated on the surfaces to be inspected. This pattern generates periodic illumination with areas of light and shade, which allows the system for control and analysis to successively calculate multiple detections in light/shade boundary regions, providing a redundant analysis which helps both to increase the defect detection rate and to limit the occurrence of false positives.

Depending on the shape and the arrangement of the direct illumination means or the selected pattern of projection, different contrast patterns (dots, lines, circles, crosses, squares, etc.) can be generated depending on the geometric particularities of the object to be inspected. If in a non-claimed example the inspected product is in motion on the manufacturing line, the patterns can gradually change in size and adapt to the curvature of the inspected surface, such that the areas close to the contrast boundaries will have the minimum size required in the images for detecting the defects. Likewise, if according to the invention, the product remains immobile during inspection on the manufacturing line, patterns of moving light in one or more directions will be generated so that the contrast boundaries move across the entire surface of the object.

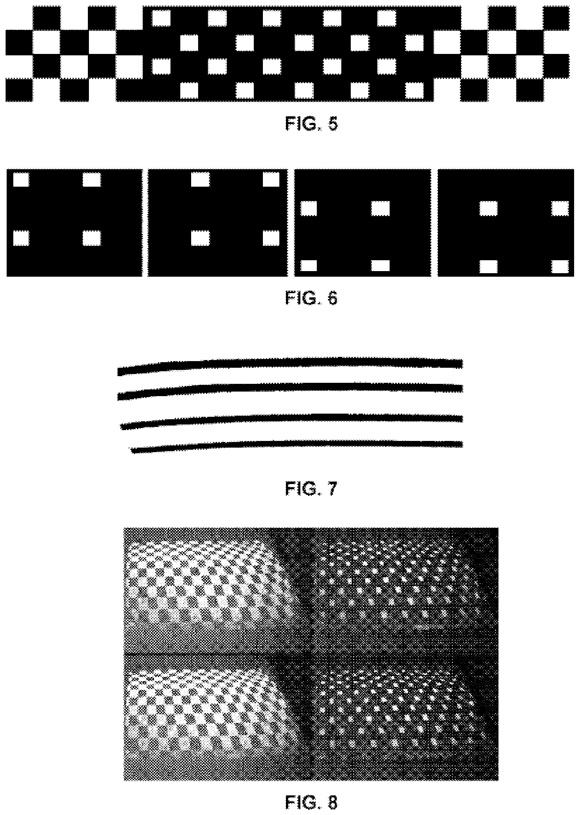

As mentioned, indirect illumination allows great pattern design flexibility in terms of grating shape and size, as well as colors. For example, image sequences in which the pattern of light resembles a chessboard (Figure 5) or a grating consisting of squares (Figure 6) can be used instead of imitating light bands.

The purpose of using patterns of this type is to minimize the number of images required for analyzing the entire surface of the product, maximizing defect amplifications in the images as a result of an indirect light striking the defects from all possible directions, which assures that the defect is highlighted regardless of the camera positioning, the dominant direction of the illumination contrast bands, the direction of movement of these bands due to the movement of the inspected product, or the illumination patterns.

Furthermore, depending on the color of the paint, it may be necessary to locate the defects in the light or dark areas of the images recorded by the cameras (2). The design of the patterns can also be adapted to this fact, for example, the pattern shown in Figure 6 is designed to work in a dark area. The inverse pattern would be suitable if work is to be performed in a light area of the images.

By means of this illumination system based on projection or rear-projection, homogeneous patterns of different colors and gray levels can also be intercalated, optimizing the detection of contrast defects using the same cameras (2) used to detect geometry defects.

The method for detecting defects on surfaces which is associated with the system of the invention is described below. First, the surfaces of the objects to be inspected are illuminated with the light emission means (1) and images are captured by the cameras (2) (as an example, Figure 7 shows a pattern obtained for a LED tunnel such as the one shown in Figure 2, in an embodiment based on direct illumination). By orienting the cameras (2) with a viewing angle with respect to the surface to be inspected, geometry defects which can be seen in consecutive images, particularly around the contrast boundaries generated by the illumination pattern (see Figure 8), are highlighted.

Once the information is input into computers, by means of algorithms and 2D filters and with the calibration of the cameras, said computers process the photogrammetric projection and the determination of the location of the defect during inspection in a synchronized manner. 3D filters are also applied to the captures of the viewing cameras (2), and a single piece of merged information concerning the defects on the surface to be inspected is obtained.

It is possible for the system to adapt the capture parameters (gain, exposure time, etc.) to the specific color of the inspected product and also to keep those capture parameters updated over time, therefore being reactive to possible variations in camera sensitivity and in luminance of the illumination systems.

With the result of the inspection, the subsystem for control and analysis will be able to print out or generate an inspection report which will show the location of the defects, as well as their severity. Said information can also be shown as 3D information in augmented reality glasses for subsequent optimized repair of said defects by means of the methods the company deems appropriate.

## Claims

1. Detection system for detecting defects on specular or semi-specular surfaces of objects to be inspected, suitable for its integration in an industrial production line, the system comprising:
- a plurality of light emission means (1) for emitting light onto the objects;
- a plurality of cameras (2) for detecting the light reflected by the objects;
- a subsystem for control and photogrammetric analysis of information associated with the light emitted by the light emission means (1) and with the light detected by the cameras (2);
- a supporting structure (3) in which the light emission means (1) and the cameras (2) of the system are arranged;
wherein the light emission means (1) are arranged in the system such that the light emitted onto the surface of the objects has a periodic pattern of light and shade, and in that said pattern has relative movement with respect to the objects to be inspected, so as to move across the surface thereof,
wherein the system is adapted such that the relative movement between the periodic pattern of light and shade areas and the objects to be inspected, is produced through the movement in one or more directions of the pattern emitted onto the objects to be inspected while said objects remain stationary,
and wherein the emitted periodic pattern of light and shade is a checkered pattern, a grating consisting of squares or triangles, or a pattern consisting of dots, straight lines, circles, or crosses,
**characterized in that**,
the subsystem for control and analysis of information in turn comprises means for processing and treatment by means of photogrammetric projection of the images captured by the cameras (2), wherein 3D coordinates of the defects can be obtained from 2D information of possible defects on the nominal surface of the inspected object and
wherein the system is adapted to generate the emitted periodic pattern of light and shade areas having a shape adapting to the surface of the objects to be inspected, such that said pattern shape varies depending on the curvature of the inspected surface.

2. System according to the preceding claim, wherein the cameras (1) are capture cameras with an image acquisition frequency comprised between 40 and 100 Hz.

3. System according to any of the preceding claims, wherein the cameras (1) are industrial CCD or CMOS cameras.

4. System according to any of the preceding claims, wherein the light emission means (1) comprise direct illumination means for direct illumination on the objects.

5. System according to the preceding claim, wherein the light emission means (1) comprise neon light emitters, fluorescent emitters, or LEDs.

6. System according to any of the preceding claims, wherein the light emission means (2) comprise indirect illumination means for indirect illumination on the objects by means of projection or rear-projection onto one or more screens (4).

7. System according to the preceding claim, wherein the light emission means (2) emit periodic patterns of light and shade onto the screens (4) which are in turn reflected onto the objects to be inspected.

8. System according to any of the preceding claims, wherein the subsystem for control and analysis of information comprises 2D and/or 3D filtering means for identifying defects in said images, analysis means for analyzing the color of the objects to be inspected, and/or representation means for representing the objects and the identified defects by means of augmented reality.

9. System according to any of the preceding claims, also comprising one or more of the following elements: high-resolution lenses for the cameras (2), one or more computers for system processing and control, one or more measuring elements for controlling the position of the objects and synchronizing the captures of the cameras (2).

10. Method for identifying defects on specular or semi-specular surfaces of objects to be inspected, **characterized in that** it comprises using a system according to any of the preceding claims, and performing the following steps:
- illuminating the surface of the objects to be inspected with the light emission means (1), such that the light emitted onto said surface has a periodic pattern of light and shade, with relative movement on the objects to be inspected;
- recording the light reflected by the objects by means of the cameras (2);
- analyzing the reflected light and the emitted light by means of the subsystem for control and analysis, through photogrammetric projection, for detecting defects on the surfaces in a way that 3D coordinates of the defects are obtained from 2D information of possible defects on the nominal surface of the inspected object, wherein the emitted periodic pattern of light and shade areas has a shape adapting to the surface of the objects to be inspected, such that said pattern shape varies depending on the curvature of the inspected surface, and wherein the emitted periodic pattern of light and shade is a checkered pattern, a grating consisting of squares or triangles, or a pattern consisting of dots, straight lines, circles, or crosses.

11. Method according to claim 10, wherein the detection system is integrated in an industrial production line for producing the objects to be inspected.

## Patentansprüche

1. Detektionssystem zur Fehlerdetektion bei spiegelnden oder halbspiegelnden Oberflächen von zu prüfenden Gegenständen, welches für die Integration in eine industrielle Produktionslinie geeignet ist, wobei das System Folgendes umfasst:
- eine Vielzahl von Lichtemissionsmitteln (1) zur Ausstrahlung von Licht auf die Gegenstände;
- eine Vielzahl von Kameras (2) zur Detektion des von den Gegenständen reflektierten Lichts;
- ein Subsystem zur Steuerung und fotogrammetrischen Analyse von Information, welche mit dem Licht, welches von den Lichtemissionsmitteln (1) ausgestrahlt wird, und mit dem Licht, welches von den Kameras (2) detektiert wird, assoziiert ist;
- eine Stützstruktur (3), in welcher die Lichtemissionsmittel (1) und die Kameras (2) des Systems angeordnet sind;
wobei die Lichtemissionsmittel (1) so im System angeordnet sind, dass das Licht, welches auf die Oberfläche der Gegenstände ausgestrahlt wird, ein periodisches Muster von Licht und Schatten aufweist, und wobei das genannte Muster eine Relativbewegung in Bezug auf die zu prüfenden Gegenstände hat, um sich über die Oberfläche derselben zu bewegen,
wobei das System so angepasst ist, dass die Relativbewegung zwischen dem periodischen Muster von Licht- und Schattenbereichen und den zu prüfenden Gegenständen, durch die Bewegung in eine oder mehrere Richtungen des auf die zu prüfenden Gegenstände ausgestrahlten Musters während die genannten Gegenstände stationär bleiben, erzeugt wird,
und wobei das ausgestrahlte periodische Muster von Licht und Schatten ein schachbrettartiges Muster, ein Gitter bestehend aus Quadraten oder Dreiecken, oder ein Muster bestehend aus Punkten, geraden Linien, Kreisen oder Kreuzen ist,
**dadurch gekennzeichnet, dass**
das Subsystem zur Steuerung und Analyse von Information wiederum Mittel zur Verarbeitung und Behandlung mittels einer fotogrammetrischen Projektion der von den Kameras (2) erfassten Bilder umfasst, wobei 3D-Koordinate der Fehler aus 2D-lnformation von möglichen Fehlern auf der Nennfläche des geprüften Gegenstands erhalten werden können und
wobei das System dazu angepasst ist, das ausgestrahlte periodische Muster von Licht- und Schattenbereichen mit einer Form, welche sich an die Oberfläche der zu prüfenden Gegenstände anpasst, zu erzeugen, sodass die genannte Musterform in Abhängigkeit von der Krümmung der geprüften Oberfläche variiert.

2. System nach dem vorhergehenden Anspruch, wobei die Kameras (1) Aufnahmekameras mit einer Bildaufnahmefrequenz, welche zwischen 40 und 100 Hz liegt, sind.

3. System nach einem der vorhergehenden Ansprüche, wobei die Kameras (1) industrielle CCD- oder CMOS-Kameras sind.

4. System nach einem der vorhergehenden Ansprüche, wobei die Lichtemissionsmittel (1) Direktbeleuchtungsmittel für die direkte Beleuchtung auf die Gegenstände umfassen.

5. System nach dem vorhergehenden Anspruch, wobei die Lichtemissionsmittel (1) Neonlichtstrahler, Fluoreszenzstrahler oder LEDs umfassen.

6. System nach einem der vorhergehenden Ansprüche, wobei die Lichtemissionsmittel (2) Indirektbeleuchtungsmittel für die indirekte Beleuchtung auf die Gegenstände mittels einer Projektion oder Rückprojektion auf einen oder mehrere Bildschirme (4) umfasst.

7. System nach dem vorhergehenden Anspruch, wobei die Lichtemissionsmittel (2) periodische Muster von Licht und Schatten auf die Bildschirme (4) ausstrahlen, welche wiederum auf die zu prüfenden Gegenstände reflektiert werden.

8. System nach einem der vorhergehenden Ansprüche, wobei das Subsystem zur Steuerung und Analyse von Information 2D- und/oder 3D-Filterungsmittel zur Erkennung von Fehlern in den genannten Bildern, Analysemittel zur Analyse der Farbe der zu prüfenden Gegenstände und/oder Darstellungsmittel zur Darstellung der Gegenstände und der erkannten Fehler mittels erweiterter Realität umfasst.

9. System nach einem der vorhergehenden Ansprüche, welches auch eines oder mehrere der folgenden Elemente umfasst: Objektive mit hoher Auflösung für die Kameras (2), einen oder mehrere Computer zur Verarbeitung und Steuerung des Systems, ein oder mehrere Messelemente zur Steuerung der Position der Gegenstände und zur Synchronisierung der Erfassungen der Kameras (2)

10. Verfahren zur Fehlererkennung bei spiegelnden oder halbspiegelnden Oberflächen von zu prüfenden Gegenständen, **dadurch gekennzeichnet, dass** es die Verwendung eines Systems nach einem der vorhergehenden Ansprüche und die Durchführung der folgenden Schritte umfasst:
- das Beleuchten der Oberfläche der zu prüfenden Gegenstände mit den Lichtemissionsmitteln (1), sodass das auf die genannte Oberfläche ausgestrahlte Licht ein periodisches Muster von Licht und Schatten aufweist, mit Relativbewegung in Bezug auf die zu prüfenden Gegenstände;
- das Aufzeichnen mittels der Kameras (2) des von den Gegenständen reflektierten Lichts;
- das Analysieren des reflektierten Lichts und des ausgestrahlten Lichts mittels des Subsystems zur Steuerung und Analyse, mittels einer fotogrammetrischen Projektion, zur Fehlerdetektion auf den Oberflächen, derart, dass 3D-Koordinate der Fehler aus 2D-lnformation von möglichen Fehlern auf der Nennfläche des geprüften Gegenstands erhalten werden,
wobei das ausgestrahlte periodische Muster von Licht- und Schattenbereichen eine Form aufweist, welche sich an die Oberfläche der zu prüfenden Gegenstände anpasst, sodass die genannte Musterform in Abhängigkeit von der Krümmung der geprüften Oberfläche variiert, und wobei das ausgestrahlte periodische Muster von Licht und Schatten ein schachbrettartiges Muster, ein Gitter bestehend aus Quadraten oder Dreiecken, oder ein Muster bestehend aus Punkten, geraden Linien, Kreisen oder Kreuzen ist.

11. Verfahren nach dem vorhergehenden Anspruch, wobei das Detektionssystem in eine industrielle Produktionslinie zur Herstellung der zu prüfenden Gegenstände integriert ist.

## Revendications

1. Système de détection de défauts dans des surfaces spéculaires ou semi-spéculaires d'objets à inspecter, adéquat pour son intégration dans une ligne de production industrielle, le système comprenant :
- une pluralité de moyens d'émission de lumière (1) pour émettre de la lumière sur les objets ;
- une pluralité de caméras (2) pour détecter la lumière réfléchie par les objets ;
- un sous-système pour le contrôle et l'analyse photogrammétrique des informations associées avec la lumière émise par les moyens d'émission de lumière (1) et avec la lumière détectée par les caméras (2) ;
- une structure de support (3) dans laquelle sont disposés les moyens d'émission de lumière (1) et les caméras (2) du système ;
dans lequel les moyens d'émission de lumière (1) sont disposés dans le système de sorte que la lumière émise sur la surface des objets a un motif périodique de lumière et d'ombre, et en ce que ledit motif a un mouvement relatif par rapport aux objets à inspecter, afin de se déplacer sur la surface de ceux-ci,
dans lequel le système est adapté de sorte que le mouvement relatif entre le motif périodique des zones de lumière et d'ombre et les objets à inspecter est produit à travers le mouvement dans une ou plusieurs directions du motif émis sur les objets à inspecter pendant que lesdits objets restent stationnaires,
et dans lequel le motif périodique de lumière et d'ombre émis est un motif en damier, un réseau consistant en des carrés ou des triangles, ou un motif consistant en des points, des lignes droites, des cercles ou des croix,
**caractérisé en ce que**,
le sous-système pour le contrôle et l'analyse des informations comprend à son tour des moyens de transformation et traitement par projection photogrammétrique des images capturées par les caméras (2), dans lequel des coordonnées en 3D des défauts peuvent être obtenues à partir d'informations en 2D des défauts possibles sur la surface nominale de l'objet inspecté et
dans lequel le système est adapté pour générer le motif périodique de zones de lumière et d'ombre émis ayant une forme adaptée à la surface des objets à inspecter, de sorte que la forme dudit motif varie en fonction de la courbure de la surface inspectée.

2. Système selon la revendication précédente, dans lequel les caméras (1) sont des caméras de capture avec une fréquence d'acquisition d'images comprise entre 40 et 100 Hz.

3. Système selon l'une quelconque des revendications précédentes, dans lequel les caméras (1) sont des caméras industrielles CCD ou CMOS.

4. Système selon l'une quelconque des revendications précédentes, dans lequel les moyens d'émission de lumière (1) comprennent des moyens d'éclairage direct pour l'éclairage direct des objets

5. Système selon la revendication précédente, dans lequel les moyens d'émission de lumière (1) comprennent des émetteurs de lumière néon, des émetteurs fluorescents ou des LED.

6. Système selon l'une quelconque des revendications précédentes, dans lequel les moyens d'émission de lumière (2) comprennent des moyens d'éclairage indirect pour l'éclairage indirect des objets au moyen de projection ou de rétroprojection sur un ou plusieurs écrans (4).

7. Système selon la revendication précédente, dans lequel les moyens d'émission de lumière (2) émettent des motifs périodiques de lumière et d'ombre sur les écrans (4) qui sont à leur tour réfléchis sur les objets à inspecter.

8. Système selon l'une quelconque des revendications précédentes, dans lequel le sous-système pour le contrôle et l'analyse des informations comprend des moyens de filtrage en 2D et/ou en 3D pour identifier des défauts sur lesdites images, des moyens d'analyse pour analyser la couleur des objets à inspecter, et/ou des moyens de représentation pour représenter les objets et les défauts identifiés au moyen de réalité augmentée.

9. Système selon l'une quelconque des revendications précédentes, comprenant en outre un ou plusieurs des éléments suivants : des objectifs à haute résolution pour les caméras (2), un ou plusieurs ordinateurs pour le traitement et le contrôle du système, un ou plusieurs éléments de mesure pour contrôler la position des objets et synchroniser les captures des caméras (2)

10. Procédé pour identifier des défauts sur des surfaces spéculaires ou semi-spéculaires d'objets à inspecter, **caractérisé en ce qu'**il comprend l'utilisation d'un système selon l'une quelconque des revendications précédentes, et la réalisation des étapes suivantes :
- éclairer la surface des objets à inspecter avec les moyens d'émission de lumière (1), de sorte que la lumière émise sur ladite surface a un motif périodique de lumière et d'ombre, avec un mouvement relatif sur les objets à inspecter ;
- enregistrer la lumière réfléchie par les objets au moyen des caméras (2) ;
- analyser la lumière réfléchie et la lumière émise au moyen du sous-système de contrôle et d'analyse, par projection photogrammétrique, pour détecter des défauts sur les surfaces de manière à ce que des coordonnées en 3D des défauts soient obtenues à partir d'informations en 2D de possibles défauts sur la surface nominale de l'objet inspecté,
dans lequel le motif périodique de zones de lumière et d'ombre émis a une forme adaptée à la surface des objets à inspecter, de sorte que la forme dudit motif varie en fonction de la courbure de la surface inspectée, et dans lequel le motif périodique de lumière et d'ombre émis est un motif en damier, un réseau consistant en des carrés ou des triangles, ou un motif consistant en des points, des lignes droites, des cercles ou des croix.

11. Procédé selon la revendication 10, dans lequel le système de détection est intégré dans une ligne de production industrielle pour produire les objets à inspecter
